(19) **Europäisches Patentamt**

**European Patent Office**

**Office européen des brevets**

(11) **EP 0 806 679 B1**

(12) **FASCICULE DE BREVET EUROPEEN**

(45) Date de publication et mention
de la délivrance du brevet:
**19.09.2001 Bulletin 2001/38**

(51) Int Cl.⁷: **G01S 1/04**, G01S 5/02

(21) Numéro de dépôt: **97400978.9**

(22) Date de dépôt: **30.04.1997**

(54) **Dispositif de réception pour système de navigation notamment par satellite**

Empfangseinrichtung für ein Navigationssystem, insbesondere über Satellit

Receiving device for a navigation system, especially by satellite

(84) Etats contractants désignés:
**DE ES FR GB IT SE**

(30) Priorité: **09.05.1996 FR 9605778**

(43) Date de publication de la demande:
**12.11.1997 Bulletin 1997/46**

(73) Titulaire: **AGENCE SPATIALE EUROPEENNE**
**F-75738 Paris Cedex 15 (FR)**

(72) Inventeurs:
• **Silvestrin, Pierluigi**
**2342 Oegstgeest (NL)**

• **Daly, Peter**
**Leeds LS16 5NL (GB)**
• **Walsh,David**
**Leeds LS6 4AQ (GB)**
• **Aardoom,Eric**
**2912 AC Nieuwerkerk a/d IJssel (NL)**

(74) Mandataire: **Jacquard, Philippe Jean-Luc et al**
**CABINET ORES,**
**6, Avenue de Messine**
**75008 Paris (FR)**

(56) Documents cités:
**EP-A- 0 581 434          US-A- 5 021 792**

**Description**

La présente invention a pour objet un dispositif de réception pour système de navigation, notamment par satellite.

On connaît déjà des dispositifs de réception permettant de déterminer l'attitude ou la direction de pointage d'un véhicule tel qu'un satellite en utilisant les signaux émis par des systèmes mondiaux de navigation par satellites dénommés GNSS, terme signifiant "Global Navigation Satellite Systems", tels que le système américain GPS (Global Positioning System) et le système GLONASS (Système russe de navigation sur orbite de satellites terrestres). Un système de couverture de navigation géostationnaire (GNOS) tel que le système EGNOS (European Geostationary Navigation Overlay System) peut être également utilisé.

On connaît déjà des dispositifs permettant la détermination de l'attitude de satellites à partir de signaux GNSS par mesure de phases différentielles, par exemple de l'Article de V.W. SPINNEY "Applications of the Global Positioning System as an Attitude Reference for Near Earth Uses", publié par l'Institute of Navigation, WARMINSTER, Pensylvania, USA, Avril 1976, ou bien de l'Article de A.K. BROWN et Collaborateurs, intitulé "Interferometric Attitude Determination Using the Global Positioning System : a New Gyrotheodolyte", publié dans les Proceedings of the 3rd International Geodetic Symposium on Satellite Positioning, qui s'est tenu à LAS CRUCES, aux USA en 1982, ou bien encore de l'Article de K.M. JOSEPH et Collaborateurs, intitulé "Precision Orientation : A New GPS Application", publié dans les comptes-rendus de "l'International Telemetering Conference", qui s'est tenue à SAN DIEGO en Californie aux USA, en Octobre 1983.

La détermination de l'attitude de n'importe quel véhicule (véhicule spatial, avion, bateau, etc...) nécessite l'existence de mesures précises de la phase différentielle de porteuses issues d'au moins deux satellites GNSS et qui sont reçues à travers en général un minimum de trois antennes non alignées montées rigidement sur le véhicule. Toutefois, pour la détermination de l'attitude suivant deux axes, également dénommée détermination de la direction de pointage, il est possible de se contenter de deux antennes seulement.

Outre la connaissance à la fois de la position du récepteur et de la position des transmetteurs qui sont obtenus en suivant et en démodulant les signaux GNSS, ces mesures de phases différentielles permettent aux récepteurs de déterminer l'attitude du véhicule avec une précision qui, dans des conditions appropriées, peut être meilleure qu'une minute d'arc.

De nombreux efforts de recherche ont été consacrés à la minimisation des erreurs relatives à la détermination de l'attitude à l'aide du système GPS, dans les limites imposées par l'architecture spécifique qui a été choisie pour le récepteur.

Deux architectures de récepteur ont fait l'objet de développements détaillés, à savoir l'architecture parallèle, dont un exemple est donné dans le Brevet US-5 185 610 (TEXAS INSTRUMENTS), et l'architecture multiplex telle que décrite dans le Brevet des Etats-Unis US-5 268 695 (TRIMBLE NAVIGATION LTD), ou bien encore dans deux articles publiés par Texas Instruments, d'une part l'article de C.R. JOHNSON et Collaborateurs, intitulé "Applications of a Multiplexed GPS User Set" publié dans les "Proceedings of the 37th Annual Meeting of the USA Institute of Navigation" - 1981 p. 61 à 77, et d'autre part l'article de R.A. MAHER intitulé "A Comparaison of Multichannel Sequential and Multiplex GPS Receiver for Air Navigation" publié dans le -Journal of the Institute of Navigation vol. 31 n°2 - été 1984.

Dans le cas d'une architecture parallèle, les mesures sont obtenues par traitement des signaux à travers des canaux multiples et identiques, dont chacun est connecté à une antenne différente. La poursuite des signaux s'effectue en continu, ce qui a pour effet l'obtention d'un faible bruit aléatoire dans les mesures de phase différentielle des porteuses. Cependant, étant donné que les signaux doivent traverser différents dispositifs analogiques, il existe nécessairement des erreurs systématiques indéterminées.

Au contraire, dans l'architecture multiplex, les mesures sont obtenues à l'aide d'un seul canal qui est commuté périodiquement entre les différentes antennes. Ceci élimine les effets d'erreurs systématiques, mais augmente notablement le niveau du bruit aléatoire.

Chacune des architectures présente donc -des inconvénients quant aux résultats obtenus ou quant à sa mise en oeuvre, et qui seront discutés ci-après.

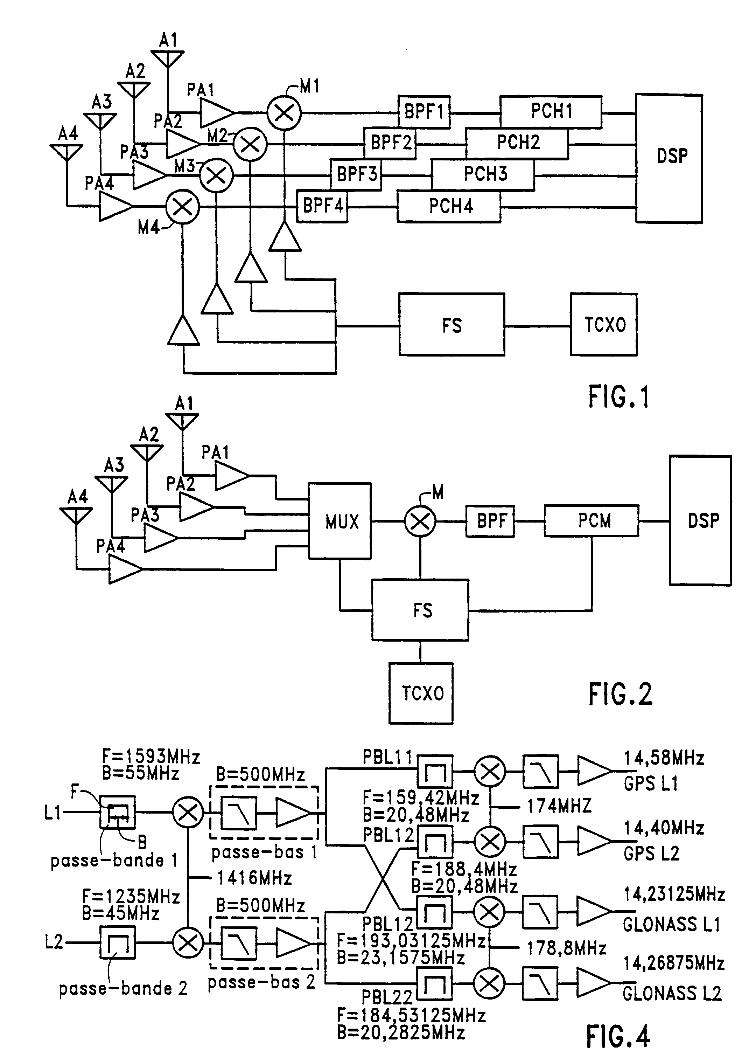

Dans le cas d'une architecture parallèle telle que représentée à la figure 1, qui met en oeuvre quatre antennes, les quatre antennes sont connectées chacune à l'une des quatre chaînes de traitement identiques qui sont contrôlées par un processeur numérique de signaux DSP.

Dans cette architecture parallèle, les signaux qui sont reçus sur les différentes antennes sont appliqués à des canaux de traitement parallèles dont chacun présente un traitement radiofréquence/fréquence intermédiaire et des boucles de suivi de codes et de porteuses pour un certain nombre de signaux, deux étant le minimum théorique, quatre signaux GNSS étant en général traités de manière à permettre une détermination de position en temps réel. Le traitement des signaux s'effectue en parallèle et indépendamment mais, en ce qui concerne les différentes étapes de mélange, les signaux de référence qui sont appliqués dérivent d'un même oscillateur de référence TCXO piloté par un synthétiseur de fréquence. En effet, si des signaux de référence indépendants étaient utilisés, aucune mesure différentielle précise des phases des porteuses ne serait possible et il serait très difficile de faire la séparation entre des différences de phase réelles des porteuses et la dérive de phase de chaque signal de référence. Conformément aux techniques modernes de réception à spectre large, des boucles de COSTAS sont mises en oeuvre pour la poursuite de la phase des porteuses, et des boucles verrouillées en phase DLL sont mises en oeuvre pour le suivi de la phase de code. On se référera sur ce point en particulier à l'Article de J.J.SPILKER, intitulé "GPS Signal Structure and Performance Characteristics", publié dans le volume 1 de la Revue Navigation, en 1980.

Un récepteur à architecture parallèle présente deux défauts principaux, à savoir des erreurs systématiques dues à la propagation en ligne dans les circuits, et une complexité structurelle. Les erreurs systématiques sont la cause principale de la perte de précision. En effet, chaque dispositif de la chaîne radiofréquence/fréquence intermédiaire présente un temps de propagation de groupe fini et donc un défaut systématique dû à la ligne, qui n'est en général pas le même pour chaque chaîne. Les filtres radiofréquence et les filtres de fréquence intermédiaire contribuent en majeure partie au retard de groupe total, et ils présentent en outre une grande sensibilité à la température. Bien que les temps de propagation de groupe à travers les chemins radiofréquence/fréquence intermédiaire des différentes antennes peuvent être appairés dans une certaine mesure et calibrés, il existe toujours des défauts d'appairage en raison des variations de température, de la radiation et des phénomènes de vieillissement, qui ont une influence directe sur la précision de la détermination de l'attitude. Il est possible de réaliser une recalibration en ligne, mais ceci augmente de manière significative la complexité du dispositif.

Enfin, la complexité et donc le coût d'un récepteur parallèle destiné à la détermination de l'attitude est comparativement élevé étant donné que la chaîne de mesure doit être multipliée par autant de canaux de réception qu'il y a d'antennes. C'est un inconvénient très sérieux dans le cas des applications où le volume, la masse et la consommation énergétique ont une grande importance, notamment dans le cas des satellites.

La mise en oeuvre d'un récepteur à architecture multiplex, dans laquelle les signaux de sortie des différentes antennes sont multiplexés, élimine à la fois les problèmes de défauts systématiques de ligne et les problèmes d'interférences radiofréquences en raison du fait qu'il existe une seule section radiofréquence/fréquence intermédiaire à laquelle sont appliqués les signaux d'antennes multiplexés dans le temps. Le multiplexage est réalisé grâce à un commutateur rapide qui peut être aisément réalisé à l'aide de diodes PIN ou de transistors à effet de champ. Ceci est représenté à la figure 2.

Dans un récepteur multiplex, les chemins de tous les signaux partagent la même section radiofréquence/ fréquence intermédiaire, de sorte que tout défaut systématique de ligne est pratiquement éliminé, à l'exception de l'influence des différences de longueurs de câbles d'antenne. L'effet d'interférence ("cross-talk") est également éliminé en raison du fait que seule une antenne est active à un moment donné. L'architecture multiplexée présente également l'avantage de nécessiter beaucoup moins de circuits que l'architecture parallèle. Ceci conduit à des économies importantes en termes de volume, de masse, de consommation électrique et de coût.

Cependant, les récepteurs à multiplexage d'antennes présentent également un certain nombre de défauts. Le défaut le plus important est représenté par la perte de performance de poursuite des signaux qui est due au fait que les signaux d'antenne sont observés uniquement pendant une certaine fraction du temps. Par exemple, le multiplexage entre quatre antennes peut conduire à une détérioration de 6 dB du rapport signal/bruit, comme le montre l'ouvrage de J.S. SPILKER, intitulé "Digital Communications by Satellite", Prentice Hall, New Jersey, USA, (1977).

En outre, la commutation multiplex doit être effectuée à un rythme suffisamment élevé pour maintenir la capacité de détecter les transitions de bits de données, qui se produisent à 50 Hertz en GPS et à 100 Hz dans le système GLONASS. En outre, des circuits de traitement numérique doivent être réinitialisés au début de chaque intervalle. Ceci implique que la phase des oscillateurs contrôlés numériquement NCO, qui sont utilisés dans les boucles de détermination de codes et de porteuses doivent être portés à chaque fois à une valeur de phase initiale et que le générateur de codes doit être initialisé à l'état correct, ce qui complique grandement la conception du récepteur. En outre, des conditions de bouclage erroné dans les boucles suivies de signaux peuvent se produire en raison des divers rythmes d'échantillonnage et de commutation qui sont mis en oeuvre, et il faut également en tenir compte.

L'idée de base de la présente invention est d'éliminer au moins en majeure partie, au moins certains des inconvénients précités grâce à une architecture combinant une chaîne à réception continue et une chaîne à réception multiplexée.

Dans ce but, l'invention concerne un dispositif de réception pour système de navigation par satellite comprenant au moins deux antennes dont une est une antenne dite de référence, un dispositif multiplexeur multiplexant des signaux des antennes et un premier dispositif de traitement situé en aval du dispositif multiplexeur pour restituer au moins un signal représentatif d'un paramètre de navigation à partir des signaux issus du dispositif multiplexeur, caractérisé en ce qu'il comporte un deuxième dispositif de traitement ayant une entrée recevant de manière continue les signaux de l'antenne de référence pour restituer au moins un signal de référence représentatif d'un paramètre de la position de l'antenne de référence, et en ce qu'il comporte un moyen de traitement pour traiter les signaux issus du dispositif multiplexeur en prenant en compte au moins un dit signal de référence, et pour calculer au moins une donnée de navigation.

Selon un mode de réalisation préféré, le dispositif multiplexeur présente une entrée recevant les signaux de l'antenne dite de référence. Le temps de commutation affecté par le dispositif multiplexeur à cette entrée est avantageusement inférieur au temps de commutation affecté aux autres entrées.

Le dispositif peut être caractérisé en ce qu'un dit signal de référence est un signal de modulation des données et en ce que ledit moyen de traitement comporte un moyen pour enlever ledit signal de modulation présent sur lesdits signaux issus du dispositif multiplexeur.

Un dit signal de référence peut être un signal représentant l'effet Doppler attaché à l'antenne de référence qui est produit par un filtre de boucle du deuxième dispositif de traitement et ledit moyen de traitement comporte un moyen pour commander à partir dudit signal représentant l'effet Doppler, et qui est produit par ledit filtre de boucle, un oscillateur commandé numériquement qui fait partie du premier dispositif de traitement, ledit oscillateur étant également commandé par un signal représentant l'effet Doppler attaché aux antennes dont les signaux sont multiplexés et qui est produit par un filtre de boucle attaché au premier dispositif de traitement.

Les filtres de boucle étant des filtres numériques, ils font en général fonctionnellement partie du processeur numérique.

De la sorte, les mesures de phase effectuées dans le deuxième dispositif de traitement sont utilisées pour diminuer la dynamique des signaux à traiter pour le premier dispositif de traitement, ce qui permet en particulier de simplifier les filtres de boucle. Ledit filtre de boucle du premier dispositif de traitement est de préférence un filtre du deuxième ordre. Ce filtre présente de préférence une bande passante inférieure à 1 Hz, et par exemple égale à 0,4 Hz.

Selon une variante avantageuse, le dispositif selon l'invention est caractérisé en ce que :

- le premier dispositif de traitement comporte un premier convertisseur radiofréquence/fréquence intermédiaire et, éventuellement un premier convertisseur analogique-numérique ceux-ci pouvant alors être disposés en cascade en aval du dispositif multiplexeur ;
- en ce que le deuxième dispositif de traitement comporte un deuxième convertisseur radiofréquence/fréquence intermédiaire et éventuellement un deuxième convertisseur analogique-numérique ceux-ci pouvant alors être disposés en cascade en aval de l'antenne de référence ;
- et en ce qu'il comporte un synthétiseur de fréquence commun au premier et au deuxième dispositifs de traitement et produisant un signal d'oscillateur local et un signal d'horloge qui sont appliqués respectivement d'une part aux premier et deuxième convertisseurs radiofréquence/fréquence intermédiaire et d'autre part au premier et au deuxième convertisseurs analogiques-numériques.

Le dispositif de traitement peut être caractérisé en ce qu'il comporte pour chaque signal de satellite à traiter, un bloc de traitement comportant une section de référence qui fait partie du deuxième dispositif de traitement et une section esclave qui fait partie du premier dispositif de traitement, chaque dite section comportant :

- un convertisseur en bande de base assurant une conversion en bande de base ainsi qu'une réjection de fréquence image ;
- un oscillateur numérique de porteuse ayant une sortie reliée à une entrée du convertisseur en bande de base ;
- un oscillateur numérique de code ;
- un générateur de code commandé par la sortie dudit oscillateur numérique de code ;
- un dispositif de corrélation recevant le signal de sortie en bande de base du convertisseur en bande de base ainsi que les codes avancés E, ponctuel P, et retardé L selon la norme GPS ;
- un dispositif d'accumulation recevant en entrée les signaux de corrélation et générant en sortie les signaux d'entrée de boucle, avancé, ponctuel et retardé ;

en ce que l'entrée du convertisseur en bande de base de la section esclave est reliée à la sortie du premier convertisseur analogique-numérique, en ce que l'entrée du convertisseur en bande de base de la section de référence est reliée à la sortie du deuxième convertisseur analogique-numérique ; et en ce que le moyen de traitement comporte un processeur numérique recevant les signaux de commande de boucle générés par les dispositifs d'accumulation de la section de référence et de la section esclave et générant des signaux de bouclage pour les oscillateurs de porteuse et les oscillateurs de code de la section de référence et de la section esclave.

Selon un mode de réalisation préféré, conduisant à une simplification du dispositif, le dispositif est caractérisé en ce qu'il comporte, pour chaque signal de satellite à traiter, un bloc de traitement comportant une section de référence qui fait partie du deuxième dispositif de traitement, une section esclave qui fait partie du premier dispositif de traitement et une section commune au premier et au deuxième dispositifs de traitement, en ce que ladite section commune comporte :

en ce que ladite section de référence comporte :

- un oscillateur numérique de porteuse ayant une sortie ;
- un oscillateur numérique de code ;
- un générateur de code commandé par ledit oscillateur numérique de code et générant des codes avancé E, ponctuel P et retardé L ;

en ce que ladite section de référence comporte :

- un convertisseur en bande de base assurant une conversion en bande de base ainsi qu'une réjection de fréquence image, ledit convertisseur en bande de base ayant une entrée reliée à la sortie du deuxième convertisseur analogique-numérique et une entrée reliée à la sortie de l'oscillateur numérique de porteuse ;
- un dispositif de corrélation recevant le signal de sortie en bande de base du convertisseur en bande de base ainsi que les codes avancés E, ponctuels P et retardés générés par le générateur de code et produisant en sortie des signaux de corrélation ;
- un dispositif d'accumulation recevant en entrée les signaux de corrélation et générant en sortie des signaux de commande de boucle, avancé, ponctuel et retardé,

et en ce que ladite section esclave comporte :

- un convertisseur en bande de base assurant une conversion en bande de base ainsi qu'une réjection de fréquence image, ledit convertisseur en bande de base ayant une entrée reliée à la sortie du premier convertisseur analogique-numérique, et une entrée reliée à une sortie de l'oscillateur numérique de porteuse,
- un dispositif de corrélation recevant le signal de sortie en bande de base du convertisseur en bande de base ainsi que le code ponctuel P généré par le générateur de code de la section de référence, et produisant en sortie un signal de corrélation ponctuel ;
- un dispositif d'accumulation recevant en entrée le signal de corrélation ponctuel et générant en sortie un signal de commande de boucle ponctuel, et en ce que le moyen de traitement comporte un processeur numérique recevant les signaux de commande de boucle générés par les dispositifs d'accumulation de la section de référence et de la section esclave et générant des signaux de bouclage pour l'oscillateur de porteuse et l'oscillateur de code.

D'autres caractéristiques et avantages de l'invention apparaîtront à la lecture de la description qui va suivre, donnée à titre d'exemple non limitatif, en liaison avec les dessins dans lesquels :

- la figure 1 représente un schéma d'une architecture parallèle selon l'Art Antérieur ;
- la figure 2 représente un schéma d'une architecture multiplex selon l'Art Antérieur ;
- la figure 3 représente un schéma-bloc d'une architecture d'un récepteur selon la présente invention ;
- la figure 4 représente un exemple d'un étage radiofréquence/fréquence intermédiaire susceptible d'être utilisé dans le cadre de la présente invention ;
- la figure 5 représente un schéma-bloc d'un mode de réalisation préféré d'un récepteur selon la présente invention ;
- la figure 6a représente une variante préférée de mise en oeuvre des accumulateurs, en liaison avec le chronogramme de la figure 6b ;
- et la figure 6c représente un chronogramme illustrant une correction d'inversion de signe dans les valeurs corrélées.

Comme le montre la figure 1, un récepteur à architecture parallèle présente un certain nombre d'antennes, par exemple 4, référencées $A_1$ à $A_4$ qui attaquent des préamplificateurs référencés $PA_1$ à $PA_4$ dont la sortie est appliquée à une entrée de mélangeurs $M_1$ à $M_4$ dont l'autre sortie reçoit des signaux fournis par un synthétiseur de fréquence FS commandé par un oscillateur à quartz stable TCXO. La sortie des mélangeurs $M_1$ à $M_4$ est appliquée à des filtres passe-bande $BPF_1$....$BPF_4$ dont la sortie attaque des canaux de traitement $PCH_1$...$PCH_4$ commandés par un processeur numérique DSP.

Selon la figure 2, un récepteur multiplexé reçoit les signaux de sortie des antennes $A_1$ ... $A_4$ et les applique à des préamplificateurs $PA_1$ à $PA_4$ dont la sortie est appliquée à un commutateur MUX commandé de même que le mélangeur M par un synthétiseur FS également piloté par un oscillateur stabilisé TCXO. Dans ce cas, le processeur numérique DSP travaille en multiplexage temporel avec un seul filtre passe-bande BPF et un seul canal de traitement PCH.

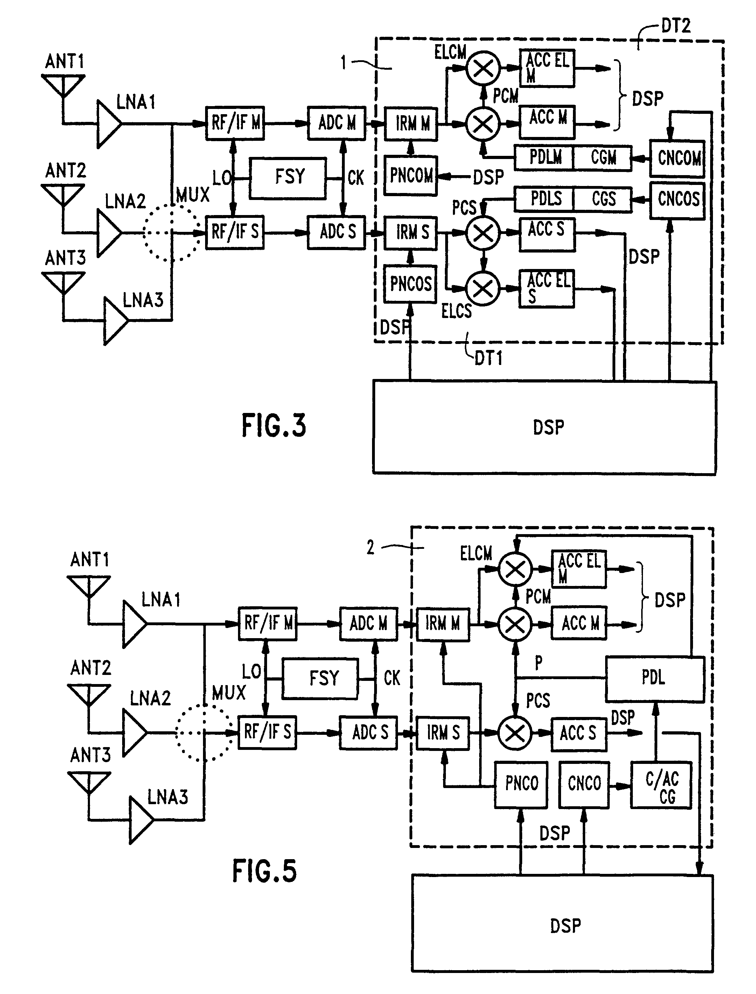

L'architecture correspondant à la présente invention (voir la figure 3) met en oeuvre un concept combinant une section de récepteur à réception non commutée qui comporte un dispositif de traitement DT2 et qui est utilisée comme canal de référence, et une section de récepteur à multiplexage des signaux d'antenne, qui comporte un dispositif de traitement DT1. Un processeur DSP et un synthétiseur de fréquence FSY pilotent les deux dispositifs de traitement DT1 et DT2.

La section continue dans le temps suit les signaux de satellite qui sont nécessaires à la détermination de l'attitude et fournit en continu des données de navigation ainsi que les mesures de porteuses et de codes. Ces mesures sont ensuite utilisées pour assister les boucles de poursuite d'un certain nombre de canaux esclaves qui partagent entre eux le même étage radiofréquence/fréquence intermédiaire et sont reliés fonctionnellement à un groupe d'antennes montées sur le véhicule dans une architecture à multiplexage dans le temps.

Il est important de noter que le signal de l'antenne qui est utilisé dans la section de réception continue fait de préférence également l'objet d'un multiplexage dans la section multiplexée du récepteur.

Les canaux esclaves sont traités par le dispositif de traitement DT1 et fournissent les différentes mesures différentielles de phase de porteuse qui sont nécessaires pour la détermination de l'attitude. Les boucles de poursuite sont assistées par le processeur DSP d'une manière similaire à celle qui est mise en oeuvre dans les récepteurs de haute performance à double fréquence, dans lesquels le suivi à la deuxième fréquence $L_2$ est assisté par les boucles de suivi plus "robustes" à la première fréquence $L_1$. Une telle technique est décrite dans l'Article de S. RILEY et Collaborateurs, intitulé "A combined GPS/GLONASS High Precision Receiver for Space Applications", publié dans les Proceedings of the Institute of Navigation, International Meeting on GPS, ION-GPS-95, Palm Springs, California, USA, Septembre 1995, ou bien encore par T.K. MEEHAN et Collaborateurs, dans l'Article intitulé "The TurboRogue GPS Receiver" publié dans les Proceedings of the 6th International Geodetic Symposium on Satellite Positioning, Columbus, Ohio, USA, 1992.

Le multiplexage des signaux d'antennes sur les canaux esclaves élimine les problèmes de défauts systématiques de ligne radiofréquence et réduit notablement la complexité matérielle par rapport à une architecture entièrement parallèle. Le fait que les canaux esclaves soient aidés par la section à réception continue du récepteur a pour effet que la seule dynamique des signaux qui est observée dans les canaux esclaves est celle qui est due à la dynamique relative entre les signaux des antennes maîtres et esclaves. Le niveau de cette dynamique est bien connu dans le cadre de la détermination de l'attitude, étant donné que les vitesses angulaires et les accélérations sont toujours limitées. Dans les applications spatiales, les accélérations relatives peuvent être estimées comme étant en général très inférieures à lg, ce qui les rend complètement négligeables d'un point de vue de la poursuite des signaux. Il en résulte que les boucles de poursuite du canal esclave peuvent être optimisées pour fournir des mesures très précises de la phase différentielle de porteuse, grâce au fait que les boucles de traitement de porteuse présentent des bandes passantes très faibles qui permettent en général de maintenir la déviation standard due au bruit de mesure à moins de lmm dans des conditions typiques des signaux.

En se reportant maintenant à la figure 3, la sortie d'un préamplificateur $LNA_1$ des signaux d'une antenne de référence $ANT_1$ attaque l'entrée d'un étage radiofréquence/fréquence intermédiaire RF/FIM dont la sortie attaque un convertisseur analogique numérique ADCM. Un multiplexeur MUX reçoit à ses entrées les signaux de sortie de l'amplificateur $LNA_1$ ainsi que ceux des amplificateurs $LNA_2$ et $LNA_3$ des antennes dites esclaves $ANT_2$ et $ANT_3$. La sortie du multiplexeur MUX attaque une entrée d'un étage radiofréquence/fréquence intermédiaire esclave RF/IFS dont la sortie attaque l'entrée d'un convertisseur analogique numérique ADCS. Un synthétiseur de fréquence FSY commandé par un oscillateur à quartz stable TCXO produit d'une part un signal d'oscillateur local LO qui est appliqué à chacun des étages radiofréquence/fréquence intermédiaire maître RF/IFM et esclave RF/IFS, et un signal d'horloge CK qui est appliqué à chacun des convertisseurs ADCM et ADCS et qui est également utilisé dans les dispositifs de traitement maîtres et esclaves qui seront décrits plus précisément ci-après.

Dans la chaîne de traitement de référence ou "maître" qui traite les signaux de l'antenne $ANT_1$, la lettre M a été ajoutée à la fin du nom désignant l'élément correspondant, alors que pour la chaîne de traitement esclave, c'est la lettre S qui a été ajoutée.

On distingue donc trois parties dans le diagramme de la figure 1, à savoir :

- les antennes $ANT_{1-3}$ et leurs amplificateurs à faible bruit associés $LNA_{1-3}$ ;
- la chaîne de traitement de signal pour la section de récepteur continu et comprenant les dispositifs marqués M ;
- la chaîne de traitement de signaux pour la partie de récepteur multiplexé comportant les dispositifs marqués S.

Le diagramme de la figure 3 montre dans le bloc 1 en pointillés, seulement les chaînes de traitement correspondant à un canal mais on comprendra qu'il peut y en avoir autant que de signaux de satellites qui doivent être suivis pour la détermination de l'attitude. On a indiqué plus haut que ce nombre de signaux était au minimum égal à 2 et en général égal à 4. Il y aura donc dans ce cas quatre blocs identiques au bloc 1 en pointillés, dont chacun est affecté à un des quatre signaux précités fournis par les antennes $ANT_{1-3}$, et qui sont commandés par le même processeur DSP.

La section maître comporte tous les éléments requis pour la réalisation d'un récepteur en continu. Le signal est appliqué à l'étage radiofréquence/fréquence intermédiaire RF/IFM dans laquelle il est amplifié, filtré et converti en une ou deux étapes à une fréquence intermédiaire IF adaptée. Les étages radiofréquence/ fréquence intermédiaire RF/IFM et RF/IFS peuvent être réalisées conformément à l'article précité de S. RILEY et Collaborateurs "A Combined GPS/GLONASS High Precision Receiver for Space Applications", publié dans les Proceedings of the Institute of Navigation International Meeting on GPS, ION-GPS-95, Palm Springs, USA, Septembre 1995. Le schéma en est donné à la figure 4. Il a la particularité d'être compatible avec tous les signaux GNSS. La partie fonctionnant à la fréquence L2 peut être omise dans le cas d'un récepteur selon l'invention, qui vise à la détermination de l'attitude, mais elle peut être cependant utile pour résoudre les problèmes d'ambiguïté de synchronisation (voir à ce sujet le Brevet US-5 185 610).

La sortie de l'étage RF/IFM est échantillonnée en phase et en quadrature et quantifiée par le convertisseur analogique numérique ADCM, avant d'être appliquée à un mélangeur numérique IRMM qui effectue la conversion finale en bande de base ainsi que la réjection de fréquence image en utilisant la sortie de l'oscillateur de porteuse commandé numériquement PNCOM en tant qu'entrée d'oscillateur local. L'entrée de cet oscillateur commandé numériquement PNCOM est commandée de manière connue en soi par le processeur de traitement DSP qui commande le filtre de boucle nécessaire pour fermer une boucle de COSTAS classique permettant de suivre un signal de spectre large à porteuse supprimée. La technique utilisée à cet effet est classique.

Le signal de référence en bande de base est corrélé avec une réplique du code pseudo-aléatoire PN dans deux corrélateurs référencés ELCM et PCM. Le corrélateur ELCM peut être par exemple composé de deux corrélateurs, un qui sert à corréler le code anticipé E et l'autre le code retardé L. Ceux-ci réalisent une boucle numérique incohérente, comme indiqué dans le Chapitre 8 du livre intitulé "Global Positioning Systems : Theory and Applications" de B.W. PARKINSON et J.J. SPILKER, édité par American Institute of Aeronautics and Astronautics (1995), dans lequel le code ponctuel P est appliqué au corrélateur PCM et les codes anticipé E et retardé L au corrélateur ELCM. Le code utilisé est le code C/A qui présente une fréquence de commutation de 1,23 MHz dans le cas du système GPS et de 0,511 MHz dans le cas du système GLONASS. Le générateur de code C/A référencé CGM est cadencé par un oscillateur à commande numérique de code CNCOM dont l'entrée est commandée de manière connue en soi par le processeur numérique de signal DSP. Une ligne à retard programmable PDLM à trois sorties est mise en oeuvre pour produire les codes anticipé E, ponctuel P et retardé L à l'intention de la boucle numérique DLL qui est bouclée sur le corrélateur PCM pour le code P et sur le corrélateur ELCM pour les codes E et L. Les signaux de sortie de la boucle numérique DLL sont obtenus à partir des accumulateurs ACCELM et ACCM dont les signaux sont envoyés au processeur DSP. Ceux-ci sont lus par le processeur DSP à un rythme relativement lent, dont la valeur typique est de 50 Hz ou de 100 Hz. Les filtres de boucle de porteuse et de boucle DLL sont paramétrés dans le processeur DSP. L'entrée du filtre de boucle de porteuse est obtenue après discrimination de phase, également réalisée par le processeur DSP, entre les échantillons en phase et en quadrature qui sont disponibles à la sortie de l'accumulateur ACCM.

La fonction des accumulateurs précités est de filtrer les composantes de signaux corrélés, avant leur traitement dans le processeur DSP. Il s'agit d'accumuler les échantillons corrélés sur une période T qui est habituellement égale à la période de code C/A (1 ms), mais cette période T peut être augmentée jusqu'à 20 ms pour augmenter les performances de suivi de boucle. Le débit des données en sortie des accumulateurs est de ce fait bien inférieur à leur débit en entrée. Par exemple, l'entrée peut être à 28 MHz, correspondant à la fréquence opératoire des multiplexeurs numériques qui précèdent les accumulateurs, et le débit de sortie est de 100 Hz en mode d'acquisition et de 1 kHz en mode de poursuite. Les totaux des accumulateurs sont stockés et sont recueillis par le processeur DSP. Pour plus de renseignements, on se reportera au Chapitre 8 de l'ouvrage "Global Positioning Systems : Theory and Applications" de B.W. PARKINSON et J.J.. SPILKER, édité par l'American Institute of Aeronautics and Astronautics (1995).

Le signal d'entrée de la section de réception esclave est obtenu par échantillonnage périodique de chaque sortie d'antenne réalisée par le multiplexeur MUX. Le signal est ensuite appliqué à un étage radiofréquence/fréquence intermédiaire RF/IFS et à une chaîne d'échantillonnage qui est identique à celle de la section de réception de référence et qui partage avec elle les signaux d'oscillateur local LO et d'horloge CK fournis par le synthétiseur de fréquence FSY. Ces signaux, aussi bien que les horloges de référence pour les oscillateurs à commande numérique PNCOM, CNCOM, PNCOS et CNCOS sont produits de manière cohérente par ledit synthétiseur de fréquence FSY commandé par un oscillateur à quartz stable.

La chaîne de traitement mise en oeuvre dans la section esclave est similaire à celle de la section de réception de référence, avec toutefois la différence que les boucles de poursuite de porteuse et de code esclave peuvent être maintenant assistées par les boucles de poursuite de référence qui traitent en permanence les signaux provenant de l'antenne de référence $ANT_1$. Selon l'invention, les boucles de poursuite esclaves sont conçues sur la base des dynamiques relatives qui sont induites uniquement par les mouvements d'attitude, et non sur la base de la dynamique totale des signaux. L'ordre des boucles peut être alors moins élevé qu'en l'absence de cette assistance et il en va de même pour les bandes passantes.

On remarquera que, dans le cadre de la présente invention, les corrélations peuvent être effectuées de manière analogique, la conversion analogique/numérique s'effectuant alors en aval des corrélateurs.

Après la phase d'acquisition initiale des signaux, toutes les données de navigation et les données observables sont disponibles en sortie de la section de réception de référence. Celle-ci fonctionne sans les pertes de performance que l'on rencontre dans un récepteur multiplex.

En particulier, le positionnement temporel des transitions de données et la valeur réelle de la modulation des données (à 50 Hz pour le GPS et à 100 Hz pour le GLONASS) sont déterminés dans la section de référence et rendus disponibles aux canaux esclaves. Il en résulte que les bits de données démodulés et leur positionnement temporel peuvent être utilisés pour éliminer la modulation des données des mesures de corrélation effectuées dans les canaux esclaves. Une conséquence importante est que le positionnement temporel de la commutation des antennes lors du multiplexage dans la section esclave peut être choisi de manière complètement indépendante du rythme de transition des données, ce qui permet de commuter les antennes à un rythme lent, par exemple situé dans la gamme de 10 à 50 Hz, ce qui à son tour diminue la charge de travail du processeur DSP. Ceci est un avantage considérable par rapport aux architectures précédemment connues du type multiplex, dans lesquelles le canal de référence multiplexé doit être initialisé au début de chaque nouvel intervalle. Dans ce cas, l'état du canal en question doit être prédit par le logiciel du récepteur et le matériel doit contenir les éléments permettant d'initialiser à chaque fois l'état initial, ce qui complique le matériel et le logiciel. On comprendra donc que l'architecture originale selon la présente invention associant un multiplexage des signaux d'antenne et le suivi en continu d'un signal d'antenne porte un avantage important tout en évitant de compliquer le dispositif.

En cas de suivi parfait de la porteuse de référence, les mesures de phase de la porteuse du canal esclave fournissent les différences de phase de porteuse entre l'antenne de référence et les antennes esclaves en faisant abstraction des différences de marche entre les canaux de référence et les canaux esclaves. Cependant, en pratique, toutes les erreurs transitoires et les erreurs de phase statique que la boucle de référence de porteuse est incapable de suivre perturbent également les mesures différentielles de phase. Les erreurs de poursuite statiques sont complètement éliminées uniquement dans le cas où l'on considère les différences de phase de porteuse uniquement dans la section esclave. C'est la raison pour laquelle le signal d'antenne de référence est de préférence également multiplexé avec les signaux des autres antennes pour produire des signaux dans la section dite esclave. Ceci signifie également que les mesures de phase de la section maître ou section de référence ne sont pas utilisées pour déterminer l'attitude, mais uniquement pour supprimer des observations du canal esclave, la dynamique des signaux qui a pour cause le mouvement du véhicule et les effets de propagation, ainsi que la modulation des données.

Les transitoires générés dans la boucle de suivi de porteuse du canal de référence lors de l'acquisition se propagent cependant aux mesures du canal différentiel esclave. Ces transitoires peuvent être atténués en observant la sortie du discriminateur de phases qui donne une indication de l'erreur instantanée de poursuite. Cette erreur de poursuite ne doit pas dépasser la région linéaire du discriminateur. En pratique, les transitoires n'existent qu'au moment de l'acquisition initiale des signaux et elles n'affectent donc pas les performances de mesure d'attitude dans des conditions opérationnelles.

La mesure de phase de porteuse de l'antenne de référence peut être obtenue par la section maître, mais l'existence de deux unités radiofréquence/fréquence intermédiaire pour les sections maître et esclave introduit une erreur systématique de ligne. Etant donné que la dérive de cette erreur pendant une période de commutation est négligeable, cette erreur peut être considérée comme constante et peut être complètement éliminée en différenciant les différences de phases. En pratique, le récepteur est susceptible de réaliser une estimation directe de cette erreur en raison du fait que l'antenne maître sert de préférence également d'antenne esclave pour un certain temps de commutation. Ce temps de commutation peut être adapté à la dérive attendue de cette erreur systématique, de manière à maximiser le temps de commutation consacré aux deux autres antennes et plus généralement aux autres antennes de manière à augmenter la précision de mesure. En d'autres termes, le temps de multiplexage peut être plus court pour les signaux de l'antenne maître que pour les signaux des antennes esclaves, et il est possible dans certains cas de ne pas échantillonner l'antenne maître à chaque cycle de multiplexage.

L'assistance des boucles de suivi du récepteur esclave par les boucles de suivi du récepteur maître peut être effectuée de la manière décrite ci-après. Cette fonction peut être entièrement réalisée par le processeur de signal numérique DSP dans lequel les boucles numériques DLL sont refermées en lisant périodiquement les sorties des accumulateurs ACCELM, ACCELS, ACCM et ACCS, par exemple à une fréquence nominale de 100 Hz.

On détermine tout d'abord l'erreur de phase en utilisant un tableau dans lequel est implementée la fonction arc tangente (fonction de discrimination de phase) et en calculant les nouveaux paramètres de chacun des oscillateurs à commande numérique PNCOM, PNCOS, CNCOM et CNCOS. Dans le cas de la boucle de référence, les boucles de poursuite de porteuse sont refermées à l'aide de filtres du troisième ordre lorsqu'on se trouve dans un état stable, c'est-à-dire après l'acquisition des signaux. Ces filtres présentent un gain variable paramétrable qui permet de modifier la bande passante de la boucle fermée si nécessaire. A l'état stabilisé, la bande passante est nominalement de 10 Hz mais peut être portée à 100 Hz, par exemple lors de l'étape d'acquisition initiale des données.

Les données de navigation sont démodulées par un algorithme de détection de fronts de montée qui fonctionne par détection de la sortie du corrélateur en phase. Le dispositif est synchronisé avec les fronts de montée ce qui permet de réduire la charge de travail du processeur DSP.

Les boucles de suivi esclaves tirent profit de deux manières différentes du fonctionnement de la section de référence. Premièrement, la démodulation des données n'a pas besoin d'être effectuée étant donné que l'information de la section de référence est disponible et que celle-ci peut être utilisée pour soustraire la modulation des données du signal esclave. Ceci est un avantage important étant donné que la longueur d'un bit qui est de 20 ms dans le cas du GPS définit normalement la limite supérieure du temps d'intégration, c'est-à-dire du nombre d'échantillons I et Q qui peuvent être accumulés à la sortie du corrélateur. L'augmentation du temps d'intégration augmente le rapport signal/bruit et donc la précision des mesures. Cette technique est généralement dénommée par les termes anglo-saxons de "Data stripping ou de "Data bit removal".

Un deuxième aspect important est que les sorties des filtres de la boucle de référence fournissent une estimation du Doppler et du rapport Doppler au lieu d'utilisation. Le Doppler et le rapport Doppler sont en général déterminés par :

1) le mouvement relatif entre les antennes et les transmetteurs et du récepteur de référence (dynamique du mouvement),
2) les phénomènes de propagation dans le milieu (dynamique d'ionosphère),
3) le mouvement relatif entre les antennes maître et esclaves (dynamique d'attitude).

Si on utilise le Doppler et le rapport Doppler estimé par les filtres de la boucle de référence pour commander les oscillateurs commandés numériquement PNCOS et CNCOS du récepteur esclave, les filtres de boucle esclaves n'ont besoin de piloter les oscillateurs commandés numériquement PNCOS et CNCOS que pour suivre la phase résiduelle et les erreurs de code, c'est-à-dire les variations dues au point 3 ci-dessus, c'est-à-dire le mouvement relatif entre les antennes maître et esclaves. L'entrée des oscillateurs commandés numériquement PNCOS et CNCOS est alors la somme entre le Doppler et le rapport Doppler estimé par les filtres de la boucle de référence et les sorties des filtres de boucle esclaves.

Etant donné que le mouvement relatif entre les antennes maître et esclaves se caractérise par une très faible dynamique (au moins dans le cas d'un satellite où les accélérations angulaires sont toujours inférieures à 10 milli rad./$s^2$), des filtres de boucle esclaves d'ordre faible et ce qui est encore plus important, des bandes passantes étroites pour les boucles fermées peuvent être utilisés dans le récepteur esclave. En pratique, on peut se contenter d'un filtre de boucle du second ordre pour la boucle de poursuite de porteuse avec une bande passante en boucle fermée inférieure ou égale à 1 Hz, par exemple compris entre 0,1 et 1 Hz. Par exemple, une bande passante typique de 0,4 Hz diminue le bruit sur la mesure de phase de porteuse d'un facteur 5 par rapport à une bande passante de 10 Hz étant donné que la déviation standard du bruit est proportionnelle à la racine carrée de la bande passante en boucle fermée à rapport signal/bruit égal.

Le dispositif peut mettre en oeuvre les filtres suivants, qui sont basés sur la théorie présentée dans l'Article de S.A. STEPHENS et Collaborateurs, intitulé "Controlled-Root Formulation for Digital Phase-Locked Loops" publié dans IEEE Transactions on Aerospace and Electronic Systems, vol. 31, n° 1, Janvier 1995.

Il répond à la formule :

$$\hat{f} = \frac{1}{T}\left[ K_1\phi_{n-1} + K_2\sum_{i=1}^{n-1}\phi_i + K_3\sum_{i=1}^{n-1}\sum_{j=1}^{i}\phi_j \right]$$

$\phi$ est la sortie du discriminateur,
f est la fréquence estimée,
T est la période d'intégration,
$K_1$, $K_2$ et $K_3$ sont les coefficients du filtre ($K_3$ = pour un filtre d'ordre 2).

Un filtre d'ordre 3 est utilisé dans la boucle principale (boucle de Costas).

Des filtres utilisables dans le cadre de la présente invention sont donnés ci-dessous à titre d'exemple.

| Ordre | Bande Passante (Hz | T(ms) | $K_1$ | $K_2$ | $K_3$ |
|---|---|---|---|---|---|
| 3 50/20 | /10 | 2/5/10 | 0,1741 | 0,01313 | 3,585e-4 |
| 2 | 10 | 10 | 0,1911 | 0,01305 | - |
| 2 | 1 | 10 | 0,3003 | 2,344e-4 | - |

La figure 5 représente un mode de réalisation préférée de l'invention, présentant une architecture permettant une simplification aussi bien au niveau matériel que logiciel, le ou les blocs 2 encadrés en pointillés à la figure 5 étant mis en oeuvre au lieu du ou des blocs 1 encadrés en pointillés à la figure 3.

Ce concept fonctionne si la distance entre les antennes maître et esclaves est très inférieure à la distance de corrélation C/A. Etant donné que cette distance est de 586 m dans le système GPS et deux fois cette valeur dans le cas du système GLONASS, et que les lignes de base entre les antennes d'un satellite sont au plus de quelques mètres, cette condition est tout à fait remplie. Le concept est le même que celui qui est décrit précédemment, excepté que les oscillateurs commandés numériquement, aussi bien pour la porteuse que pour le code, ont été éliminés dans la section esclave et que les signaux appliqués au mélangeur de réjection image du récepteur esclave IRMS et au corrélateur ponctuel esclave PCS sont exactement les mêmes que ceux qui sont appliqués aux circuits correspondants IRMM et PCM. Le signal esclave en bande de base est décorrélé dans le corrélateur FPC et la sortie est accumulée dans le circuit ACCS. La sortie de cet accumulateur est lue périodiquement par le processeur numérique DSP mais il n'est pas utilisé pour fermer des boucles de poursuite, ce qui simplifie le logiciel. Une mesure de phase est obtenue à partir des signaux en phase et en quadrature disponibles à la sortie de l'accumulateur, à l'aide d'un discriminateur de phase tel qu'un discriminateur en arc tangente commandé par le logiciel du processeur DSP.

En d'autres termes, les circuits suivants sont mis en oeuvre à la fois dans les figures 3 et 5 : $LNA_{1-3}$, RF/IFM, RF/IFS, FSY, ADCM, ADCS, IRMM, IRMS, PCM, PCS, ACCM, ACCS. Les circuits suivants sont communs à la section maître et à la section esclave : ECLM, ACCELM, la ligne à retard programmable PDL, le générateur de code C/A, CG, et les oscillateurs à commande numérique PNCO et CNCO. Ceci conduit à la suppression d'un accumulateur (ACCELS), d'un corrélateur (ELCS), d'un générateur de code C/A, d'une ligne à retard programmable, d'un oscillateur numérique pour la porteuse, et d'un oscillateur numérique pour le code.

Dans des conditions de poursuite nominales, c'est-à-dire après l'acquisition du signal, et étant donné la faible séparation des antennes, la corrélation entre les signaux des antennes esclaves et le code ponctuel de référence introduit une baisse négligeable du rapport signal/bruit. De sorte, les mesures de phase de porteuse de la section esclave multiplexée restent de bonne qualité et leur déviation standard de bruit est déterminée par les caractéristiques de la boucle de COSTAS de la section de référence. Il est important de noter que, alors que la poursuite de la porteuse de référence est réalisée en boucle fermée et que l'oscillateur numérique NCO de porteuse est piloté de manière à être en phase avec le signal d'entrée de la chaîne de référence, les sorties des accumulateurs esclaves des différents blocs 2 sont décalées en phase en proportion du déplacement de l'antenne esclave par rapport à l'antenne maître. Cette conception qui est mise en oeuvre dans tous les récepteurs d'attitude (voir en particulier le Brevet US-5 185 610 précité ou bien le Brevet US-5 268 695 précité) réduit à la fois la complexité du matériel et du logiciel étant donné qu'il élimine le besoin de boucle de poursuite de porteuse spécifique et de composants tels que des corrélateurs E/L ou les accumulateurs et les oscillateurs numériques de porteuse et de code dans les canaux esclaves, sans influer notablement sur les performances obtenues.

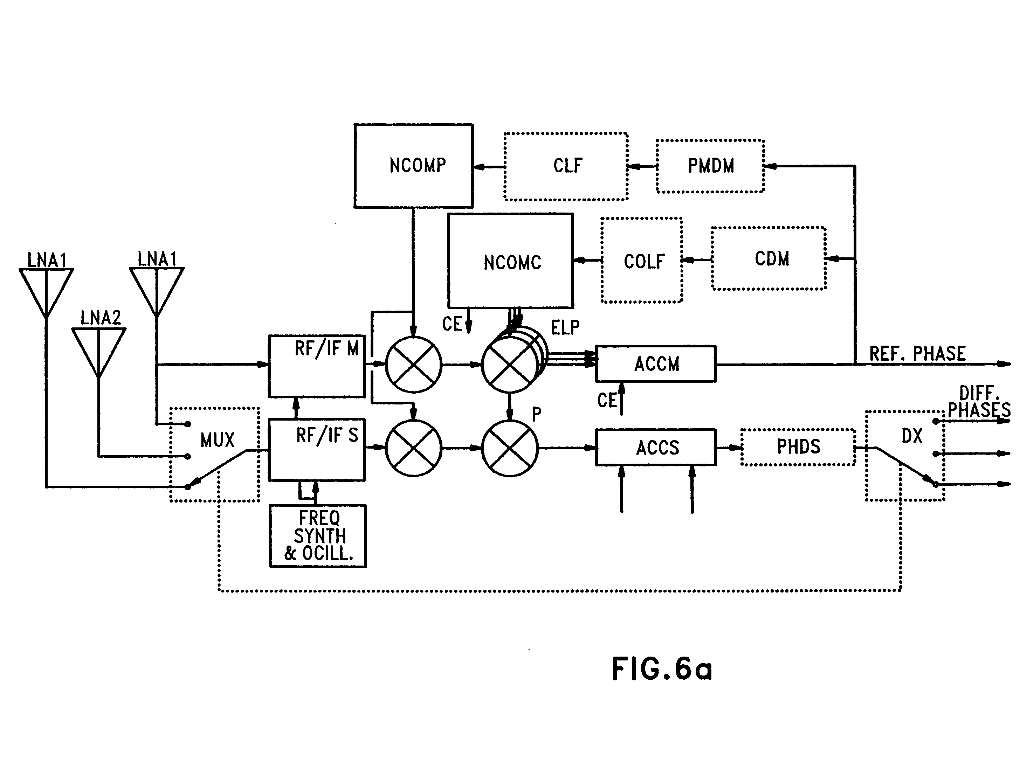

Selon un mode de réalisation représenté à la figure 6a, les accumulateurs (ou corrélateurs) de la section esclave du récepteur sont préférentiellement modifiés de manière à minimiser ou à éliminer les pertes de corrélation dues aux commutations dans la section esclave du récepteur.

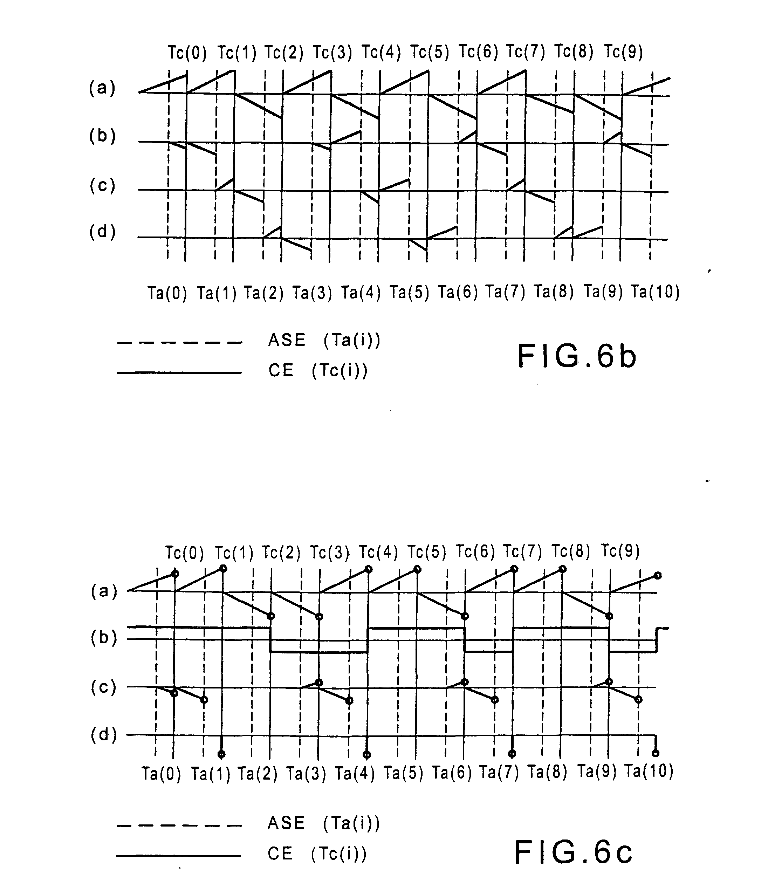

Une première modification consiste à lire et à ré-initialiser les accumulateurs à l'aide de deux signaux indépendants, à savoir le signal CE d'instant de code. et le signal ASE d'instant de commutation d'antenne, alors que classiquement cette ré-initialisation ne s'effectuera qu'à l'aide du signal CE. Le signal CE d'instant de code ré-initialise donc les accumulateurs des canaux maître et esclave, et provoque une interruption du processeur DSP qui lit alors toutes les valeurs, alors que le signal ASE d'instant de code provoque la ré-initialisation des seuls accumulateurs du ou des canaux esclave. Ceci est montré à la figure 6b dans laquelle le rythme de commutation d'antenne et le rythme de l'instant de code CE sont choisis par hypothèse égaux, mais on rappellera que ces deux rythmes peuvent être choisis de manière entièrement indépendante l'un de l'autre.

Le signal a représente la sortie du corrélateur de phase du canal de référence, et les signaux b à d représentent la sortie des accumulateurs.

A la figure 6a, on voit que les accumulateurs ACCM de la section maître reçoivent le signal CE et que les accumulateurs ACCS de la section esclave reçoivent à la fois les signaux CE et le signal ASE précité. Les signaux de sortie des accumulateurs ACCS sont fournis à un discriminateur de phase PHDS et sont dirigés par le circuit d'aiguillage DX vers les sorties, représentant les phases différentielles, par commutation en synchronisme avec la commutation du multiplexeur MUX.

Les signaux de sortie des accumulateurs maître ACCM, qui représentent la phase de référence, sont introduits dans un discriminateur de code CDM et d'un discriminateur de phase PHDM. La sortie du discriminateur PHDM attaque un filtre de boucle CLF, qui lui-même attaque un oscillateur à commande numérique NCOMP qui produit une réplique de la porteuse, utilisée en tant que signal d'oscillateur local pour le module maître et pour le module esclave. Le discriminateur CDM attaque, à travers un filtre de boucle COLF, un oscillateur à commande numérique NCOMC qui a pour fonction de générer le code C/A (E,L,P) et le code CE.

La deuxième caractéristique consiste en un traitement de l'inversion des données ("data stripping") qui permet d'éliminer de la lecture des accumulateurs (ou corrélateurs) les inversions de signe qui auraient pu être produits par la modulation du signal par les données de navigation. Ceci est illustré à la figure 6c. Si on suppose que le canal de référence est programmé pour effectuer une corrélation sur une période complète d'un bit, les bits de données sont détectés lors de l'activation du signal CE d'instant de commutation. Les valeurs de corrélation partielle sont obtenues par paires, chaque échantillon étant modulé par un bit de données différent. Une fois que les signes de bits de données consécutifs sont déterminés par la section de référence, ils peuvent être utilisés par la section esclave pour corriger une paire de valeurs de corrélation partielle. Les valeurs ont alors le même signe et peuvent être sommées pour former un unique échantillon de corrélation présentant une énergie de signal maximale, dont on peut extraire une estimation de la phase de porteuse. La figure 6c montre les valeurs de corrélation de référence (a), les bits de données détectés (b), les valeurs de corrélation du canal esclave (c) et la valeur finale de corrélation (d).

**Revendications**

1. Dispositif de réception pour système de navigation par satellite comprenant au moins deux antennes dont une est une antenne dite de référence, un dispositif multiplexeur multiplexant des signaux des antennes et un premier dispositif de traitement situé en aval du dispositif multiplexeur pour restituer au moins un signal représentatif d'un paramètre de navigation à partir des signaux issus du dispositif multiplexeur, **caractérisé en ce qu'**il comporte un deuxième dispositif de traitement (DT2) ayant une entrée recevant de manière continue les signaux de l'antenne de référence (ANT1) pour restituer au moins un signal de référence représentatif d'un paramètre de la position de l'antenne de référence (ANT1) et en ce qu'il comporte un moyen de traitement (DSP) pour traiter les signaux issus du dispositif multiplexeur en prenant en compte au moins un dit signal de référence, et pour calculer au moins une donnée de navigation.

2. Dispositif selon la revendication 1, **caractérisé en ce que** le dispositif multiplexeur (MUX) présente une entrée recevant les signaux de l'antenne de référence (ANT1).

3. Dispositif selon la revendication 2, **caractérisé en ce que** le temps de commutation affecté par le dispositif multiplexeur (MUX) à ladite entrée recevant le signal de l'antenne de référence est inférieur au temps de commutation affecté par le dispositif multiplexeur (MUX) à ses autres entrées recevant les signaux issus des autres antennes (ANT2, ANT3).

4. Dispositif selon une des revendications précédentes, **caractérisé en ce que** :

   - le premier dispositif de traitement (DT1) comporte un premier convertisseur radiofréquence/ fréquence intermédiaire (RF/IFS) disposé en aval du dispositif multiplexeur (MUX) ainsi qu'un premier convertisseur analogique-numérique (ADCS) ;
   - en ce que le deuxième dispositif de traitement comporte un deuxième convertisseur radiofréquence/fréquence intermédiaire (RF/IFM) disposé en aval de l'antenne de référence (ANT1), ainsi qu'un deuxième convertisseur analogique-numérique (ADCS) ;
   - et en ce qu'il comporte un synthétiseur de fréquence commun au premier (DT1) et au deuxième (DT2) dispositifs de traitement produisant un signal d'oscillateur local (LO) et un signal d'horloge (CK) qui sont appliqués respectivement d'une part au moins aux premier (RF/IFS) et deuxième (RF/IFM) convertisseurs radiofréquence/fréquence intermédiaire et d'autre part au moins au premier (ADCS) et au deuxième (ADCM) convertisseurs analogique-numérique.

5. Dispositif selon la revendication 4, **caractérisé en ce que** le premier (ADCS) et le deuxième (ADCM) convertisseurs analogique-numérique sont disposés en aval et en cascade respectivement avec le premier (DT1) et le deuxième (DT2) dispositifs de traitement.

6. Dispositif selon une des revendications 4 ou 5, **caractérisé en ce qu'**il comporte pour chaque signal de satellite à traiter, un bloc de traitement (1) comportant une section de référence qui fait partie du deuxième dispositif de traitement (DT2) et une section esclave qui fait partie du premier dispositif de traitement (DT1), chaque dite section comportant :

   - un convertisseur en bande de base (IRMM, IRMS) assurant une conversion en bande de base ainsi qu'une réjection de fréquence image ;
   - un oscillateur numérique de porteuse (PNCOM, PNCOS) ayant une sortie reliée à une entrée du convertisseur en bande de base (IRMM, IRMS) ;

- un oscillateur numérique de code (CNCOM, CNCOS) ;
- un générateur de code (CGM, CGS, PDLM, PDLS) commandé par ledit oscillateur numérique de code et générant des codes avancé E, ponctuel P et retardé L ;
- un dispositif de corrélation (ELCM, ELCS, PCM, PCS) recevant le signal de sortie en bande de base du convertisseur en bande de base ainsi que les codes avancé E, ponctuel P, et retardé L, générés par le générateur de code et produisant en sortie des signaux de corrélation ;
- un dispositif d'accumulation (ACCELM, ACCELS) recevant en entrée les signaux de corrélation et générant en sortie les signaux de commande de boucle, avancé, ponctuel et retardé ;

en ce que l'entrée du convertisseur en bande de base de la section esclave (IRMS) est reliée à la sortie du premier convertisseur analogique-numérique (ADCS), en ce que l'entrée du convertisseur en bande de base de la section de référence (IRMM) est reliée à la sortie du deuxième convertisseur analogique-numérique (ADCM), et en ce que le moyen de traitement comporte un processeur numérique (DSP) recevant les signaux de commande de boucle générés par les dispositifs d'accumulation de la section de référence (ACCELM) et de la section esclave (ACCELS) et générant des signaux de bouclage pour les oscillateurs de porteuse (PNCOM, PNCOS) et les oscillateurs de code (CNCOM, CNCOS) de la section de référence et de la section esclave.

7. Dispositif selon une des revendications 4 ou 5, **caractérisé en ce qu'**il comporte, pour chaque signal de satellite à traiter, un bloc de traitement comportant une section de référence qui fait partie du deuxième dispositif de traitement (DT2) , , une section esclave qui fait partie du premier dispositif de traitement (DT1) et une section commune au premier et au deuxième dispositifs de traitement, en ce que ladite section commune comporte :

- un oscillateur numérique de porteuse (PNCO) ayant une sortie ;
- un oscillateur numérique de code (CNCO) ;
- un générateur de code (CG, PDL) commandé par ledit oscillateur numérique de code (CNCO) et générant des codes avancé E, ponctuel P et retardé L ;

en ce que ladite section de référence comporte :

- un convertisseur en bande de base (IRMM) assurant une conversion en bande de base ainsi qu'une réjection de fréquence image, ledit convertisseur en bande de base (IRMM) ayant une entrée reliée à la sortie du deuxième convertisseur analogique-numérique (ADCM) et une entrée reliée à la sortie de l'oscillateur numérique de porteuse (PNCO) ;
- un dispositif de corrélation (ELCM, PCM) recevant le signal de sortie en bande de base du convertisseur en bande de base (IRMM) ainsi que les codes avancés E, ponctuels P et retardés générés par le générateur de code (CG, PDL) et produisant en sortie des signaux de corrélation ;
- un dispositif d'accumulation (ACCELM, ACCM) recevant en entrée les signaux de corrélation et générant en sortie des signaux de commande de boucle, avancé, ponctuel et retardé,

et en ce que ladite section esclave comporte :

- un convertisseur en bande de base (IRMS) assurant une conversion en bande de base ainsi qu'une réjection de fréquence image, ledit convertisseur en bande de base (IRMS) ayant une entrée reliée à la sortie du premier convertisseur analogique-numérique (ADCS), et une entrée reliée à une sortie de l'oscillateur numérique de porteuse (PNCO),
- un dispositif de corrélation (PCS) recevant le signal de sortie en bande de base du convertisseur en bande de base (IRMS) ainsi que le code ponctuel P généré par le générateur de code (GC) de la section de référence, et produisant en sortie un signal de corrélation ponctuel ;
- un dispositif d'accumulation (ACCS) recevant en entrée le signal de corrélation ponctuel et générant en sortie un signal de commande de boucle ponctuel, et en ce que le moyen de traitement comporte un processeur numérique (DPS) recevant les signaux de commande de boucle générés par les dispositifs d'accumulation (ACCELM, ACCM, ACCS) de la section de référence et de la section esclave et générant des signaux de bouclage pour l'oscillateur de porteuse (PNCO) et l'oscillateur de code (CNCO).

8. Dispositif selon une des revendications précédentes, **caractérisé en ce qu'**un dit signal de référence est un signal de modulation des données et en ce que ledit moyen de traitement comporte un moyen pour enlever ledit signal de modulation présent sur lesdits signaux issus du dispositif multiplexeur.

9. Dispositif selon une des revendications précédentes, **caractérisé en ce qu'**un dit signal de référence est un signal représentant l'effet Doppler attaché à l'antenne de référence (ANT1) qui est produit par un filtre de boucle attaché au deuxième dispositif de traitement et en ce que ledit moyen de traitement comporte un moyen pour commander, à partir dudit signal représentant l'effet Doppler, un oscillateur commandé numériquement (PNCOS, PNCO) qui fait partie du premier dispositif de traitement (DT1), ledit oscillateur étant également commandé par
un signal représentant l'effet Doppler attaché aux antennes dont les signaux sont multiplexés et qui est produit par un filtre de boucle attaché au premier dispositif de traitement (DT1).

10. Dispositif selon la revendication 9, **caractérisé en ce que** ledit filtre de boucle du premier dispositif de traitement est un filtre du deuxième ordre.

11. Dispositif selon la revendication 10, **caractérisé en ce que** ledit filtre de boucle du premier dispositif de traitement présente une bande passante inférieure à 1 Hz.

12. Dispositif selon une des revendications précédentes, **caractérisé en ce que** le premier dispositif de traitement (DT1) comporte au moins un dispositif d'accumulation ré-initialisé à la fois par un signal (CE) d'instant de code et par un signal (ASE) d'instant de commutation d'antenne, et en ce que le deuxième dispositif de traitement (DT2) comporte au moins un dispositif d'accumulation ré-initialisé par ledit signal (CE) d'instant de code.

13. Dispositif selon une des revendications précédentes, **caractérisé en ce que** le deuxième dispositif de traitement (DT2) comporte au moins un dispositif d'accumulation auquel est associé un dispositif de détermination du signe des bits de données consécutifs, et en ce que le premier dispositif de traitement (DT1) comporte au moins un dispositif d'accumulation associé à un dispositif de correction des valeurs de corrélation partielle, en fonction du signe des bits de données consécutifs, de manière à obtenir des valeurs de signe identique.

## Claims

1. A satellite navigation system receiver comprising at least two antennas, one of which is a "reference antenna", a multiplexer for multiplexing signals from the antennas, and a first processor situated downstream from the multiplexer to deliver at least one signal representative of a navigation parameter on the basis of signals from the multiplexer, the receiver being **characterized in that** it includes a second processor (DT2) having an input that receives signals continuously from the reference antenna ($ANT_1$) to deliver at least one reference signal representative of a parameter concerning the position of the reference antenna ($ANT_1$), and in that it includes processor means (DSP) for processing the signals from the multiplexer while taking at least one "reference" signal into account, and for calculating at least one item of navigation data.

2. A receiver according to claim 1, **characterized in that** the multiplexer (MUX) has an input that receives signals from the reference antenna ($ANT_1$).

3. A receiver according to claim 2, **characterized in that** the switching time allocated by the multiplexer (MUX) to said input receiving the signal from the reference antenna is shorter than the switching time allocated by the multiplexer (MUX) to its other inputs receiving signals from other antennas ($ANT_2$, $ANT_3$).

4. A receiver according to any preceding claim, **characterized in that**:

· the first processor (DT1) includes a first RF/IF converter (RF/IFS) disposed downstream from the multiplexer (MUX), and a first analog-to-digital converter (ADCS);
· in that the second processor includes a second RF/IF converter (RF/IFM) disposed downstream from the reference antenna ($ANT_1$), and a second analog-to-digital converter (ADCS); and
· in that it includes a frequency synthesizer common to the first and second processors (DT1, DT2) and producing a local oscillator signal (LO) and a clock signal (CK) which are applied respectively firstly to at least the first and second RF/IF converters (RF/IFS, RF/IFM) and to at least the first and second analog-to-digital converters (ADCS, ADCM).

5. A receiver according to claim 4, **characterized in that** the first and second analog-to-digital converters (ADCS, ADCM) are disposed downstream from and in cascade with the first and second processors (DT1, DT2) respectively.

**6.** A receiver according to claim 4 or 5, **characterized in that** for each satellite signal to be processed, it includes a processor block (1) including a reference section forming a portion of the second processor (DT2) and a slave section forming a portion of the first processor (DT1), each said section comprising:

· a baseband converter (IRMM, IRMS) for converting into baseband and also for image frequency rejection;
· a numerically-controlled carrier oscillator (PNCOM, PNCOS) having an output connected to an input of the baseband converter (IRMM, IRMS);
· a numerically-controlled code oscillator (CNCOM, CNCOS);
· a code generator (CGM, CGS, PDLM, PDLS) controlled by said numerically-controlled code oscillator and generating early, punctual, and late codes E, P, and L;
· a correlator (ELCM, ELCS, PCM, PCS) receiving the signal output in baseband from the baseband converter and the early, punctual, and late codes E, P, and L, as generated by the code generator, and outputting correlation signals; and
· an accumulator (ACCELM, ACCELS) receiving the correlation signals as inputs and generating early, punctual, and late loop control signals as outputs;
in that the input of the slave section baseband converter (IRMS) is connected to the output of the first analog-to-digital converter (ADCS);
in that the input of the reference section baseband converter (IRMM) is connected to the output of the second analog-to-digital converter (ADCM); and
in that the processor means includes a digital processor (DSP) receiving the loop control signals generated by the accumulator of the reference section (ACCELM) and by the accumulator of the slave section (ACCELS), and generating loop signals for the carrier oscillators (PNCOM, PNCOS) and for the code oscillators (CNCOM, CNCOS) of the reference section and of the slave section.

**7.** A receiver according to claim 4 or 5, **characterized in that**, for each satellite signal to be processed, it includes a processor block including a reference section forming a portion of the second processor (DT2), a slave section forming a portion of the first processor (DT1), and a section common to the first and second processors, in that said common section includes:

· a numerically-controlled carrier oscillator (PNCO) having an output;
· a numerically-controlled code oscillator (CNCO); and
· a code generator (CG, PDL) controlled by said numerically-controlled code oscillator (CNCO) and generating early, punctual, and late codes E, P, and L;

in that said reference section includes:

· a baseband converter (IRMM) for conversion into baseband and for image frequency rejection, said baseband converter (IRMM) having an input connected to the output of the second analog-to-digital converter (ADCM) and an input connected to the output of the numerically-controlled carrier oscillator (PNCO);
· a correlator (ELCM, PCM) receiving the signal output in baseband from the baseband converter (IRMM) together with the early, punctual, and late codes E, P, and L generated by the code generator (CG, PDL) and outputting correlation signals; and
· an accumulator (ACCELM, ACCM) receiving the correlation signals as inputs and generating as outputs early, punctual, and late loop control signals;

in that said slave section includes:

· a baseband converter (IRMS) performing baseband conversion and image frequency rejection, said baseband converter (IRMS) having an input connected to the output of the first analog-to-digital converter (ADCS), and an input connected to the output of the numerically-controlled carrier oscillator (PNCO);
· a correlator (PCS) receiving the signal output in baseband from the baseband converter (IRMS) together with the punctual code P generated by the code generator (GC) of the reference section, and outputting a punctual correlation signal; and
· an accumulator (ACCS) receiving the punctual correlation signal as its input and outputting a punctual loop control signal;

and in that the processor means includes a digital processor (DPS) receiving the loop control signals generated by the accumulators (ACCELM, ACCM, ACCS) of the reference section and of the slave section, and generating loop signals for the carrier oscillator (PNCO) and for the code oscillator (CNCO).

8. A receiver according to any preceding claim, **characterized in that** one of said reference signals is a data modulation signal, and in that said processor means includes means for removing said modulation signal present on said signals from the multiplexer device.

9. A receiver according to any preceding claim, **characterized in that** one of said reference signals is a signal representing the Doppler effect associated with the reference antenna (ANT$_1$) and which is produced by a loop filter associated with the second processor; and in that said processor means include means responsive to said signal representing the Doppler effect to control a numerically-controlled oscillator (PNCOS, PNCO) forming a portion of the first processor (DT1), said oscillator also being controlled by a signal representing the Doppler effect associated with the antennas whose signals are multiplexed and which is produced by a loop filter associated with the first processor (DT1).

10. A receiver according to claim 9, **characterized in that** said loop filter of the first processor is a second order filter.

11. A receiver according to claim 10, **characterized in that** said loop filter of the first processor has a passband of less than 1 Hz.

12. A receiver according to any preceding claim, **characterized in that** the first processor (DT1) includes at least one accumulator that is reinitialized both by a code instant signal (CE) and by an antenna switching instant signal (ASE), and in that the second processor (DT2) includes at least one accumulator reinitialized by said code instant signal (CE).

13. A receiver according to any preceding claim, **characterized in that** the second processor (DT2) includes at least one accumulator which is associated with a circuit for determining the signs of consecutive data bits, and in that the first processor (DT1) includes at least one accumulator associated with a circuit for correcting partial correlation values as a function of the signs of consecutive data bits in such a manner as to obtain identical sign values.

**Patentansprüche**

1. Empfangseinrichtung für Navigationssysteme durch Satellit, umfassend wenigstens zwei Antennen, von denen die eine eine Bezugsantenne ist, eine Multiplexereinrichtung, welche die Signale der Antennen multiplext, und eine erste Verarbeitungseinrichtung, die zum Wiederherstellen von wenigstens einem für einen Navigationsparameter repräsentativen Signal ausgehend von den Signalen, die von der Multiplexereinrichtung hervorgegangen sind, stromabwärts von der Multiplexereinrichtung liegt, **dadurch gekennzeichnet, dass** sie eine zweite Verarbeitungseinrichtung (DT2) enthält, die einen Eingang hat, der in kontinuierlicher Weise die Signale der Bezugsantenne (ANT1) zum Wiederherstellen von wenigstens einem Bezugssignal empfängt, das für einen Parameter der Position der Bezugsantenne (ANT1) repräsentativ ist, und dass sie ein Verarbeitungsmittel (DSP) zum Verarbeiten der von der Multiplexereinrichtung hervorgegangenen Signale unter Berücksichtigung von wenigstens einem genannten Bezugssignal und zum Berechnen von wenigstens einem der Navigationsdaten enthält.

2. Einrichtung gemäß Anspruch 1, **dadurch gekennzeichnet, dass** die Multiplexereinrichtung (MUX) einen Eingang aufweist, der die Signale der Bezugsantenne (ANT1) empfängt.

3. Einrichtung gemäß Anspruch 2, **dadurch gekennzeichnet, dass** die Umschaltzeit, die durch die Multiplexereinrichtung (MUX) an dem genannten Eingang, der das Signal der Bezugsantenne empfängt, vorgesehen ist, unter der Umschaltzeit ist, die durch die Multiplexereinrichtung (MUX) ihren anderen Eingängen, welche die von den anderen Antennen (ANT2, ANT3) hervorgegangenen Signale empfangen, zugewiesen ist.

4. Einrichtung gemäß einem der vorhergehenden Ansprüche, **dadurch gekennzeichnet, dass**:

- die erste Verarbeitungseinrichtung (DT1) einen ersten Hochfrequenz/Zwischenfrequenz (RF/IFS)-Umsetzer enthält, der stromabwärts von der Multiplexereinrichtung (MUX) angeordnet ist, sowie einen ersten Analog-Digital-(ADCS)-Umsetzer;

- dass die zweite Verarbeitungseinrichtung einen zweiten Hochfrequenz/Zwischenfrequenz (RF/IFM)-Umsetzer enthält, der stromabwärts von der Bezugsantenne (ANT1) angeordnet ist, sowie einen zweiten Analog-Digital-(ADCS)-Umsetzer;

- und dass sie einen Frequenzsynthesierer enthält, der der ersten (DT1) und der zweiten (DT2) Verarbeitungseinrichtung gemeinsam ist, welcher ein Lokaloszillatorsignal (LO) und ein Taktsignal (CK) erzeugt, die jeweils einerseits wenigstens an den ersten (RF/IFS) und zweiten (RF/IFM) Hochfrequenz/Zwischenfrequenz-Umsetzer und andererseits wenigstens an den ersten (ADCS) und den zweiten (ADCM) Analog-Digital-Umsetzer angelegt sind.

5. Einrichtung gemäß Anspruch 4, **dadurch gekennzeichnet, dass** der erste (ADCS) und der zweite (ADCM) Analog-Digital-Umsetzer stromabwärts und in Kaskade jeweils mit der ersten (DT1) und der zweiten (DT2) Verarbeitungseinrichtung angeordnet sind.

6. Einrichtung gemäß einem Ansprüche 4 oder 5, **dadurch gekennzeichnet, dass** sie für jedes zu verarbeitende Satellitensignal einen Verarbeitungsblock (1) enthält, der einen Bezugsabschnitt enthält, welcher einen Teil der zweiten Verarbeitungseinrichtung (DT2) bildet, und einen Nebenabschnitt, der einen Teil der ersten Verarbeitungseinrichtung (DT1) bildet, wobei jeder genannte Abschnitt folgendes enthält:

- einen Umsetzer im Basisband (IRMM, IRMS), der eine Umsetzung im Basisband sowie eine Zurückweisung des Frequenzbilds sicherstellt;

- einen digitalen Trägerfrequenzoszillator (PNCOM, PNCOS), der einen Ausgang hat, welcher mit einem Eingang des Umsetzer im Basisbands (IRMM, IRMS) verbunden ist;

- einen digitalen Code-Oszillator (CNCOM, CNCOS);

- einen Codegenerator (CGM, CGS, PDLM, PDLS), der durch den digitalen Code-Oszillator gesteuert bzw. geregelt ist und vorauseilende Codes E, punktuelle Codes P und verzögerte Codes L erzeugt;

- eine Korrelationseinrichtung (ELCM, ELCS, PCM, PCS), die das Ausgangssignal im Basisband von dem Umsetzer im Basisband empfängt, ebenso wie die voreilenden E-, punktuellen P- und verzögerten L-Codes, welche durch den Codegenerator erzeugt werden und am Ausgang Korrelationssignale erzeugen;

- eine Akkumulationseinrichtung (ACCELM, ACCELS), die am Eingang die Korrelationssignale empfängt und am Ausgang die voreilenden, punktuellen und verzögerten Schleifenbefehlssignale erzeugt;

dass der Eingang des Umsetzers im Basisband des Nebenabschnitts (IRMS) mit dem Ausgang des ersten Analog-Digital-Umsetzers (ADCS) verbunden ist, dass der Eingang des Umsetzers im Basisband des Bezugsabschnitts (IRMM) mit dem Ausgang des zweiten Analog-Digital-Umsetzers (ADCM) verbunden ist, und dass das Verarbeitungsmittel einen Digitalprozessor (DSP) enthält, der die Schleifenbefehlssignale empfängt, welche durch die Akkumulationseinrichtungen des Bezugsabschnitts (ACCELM) und des Nebenabschnitts (ACCELS) erzeugt worden sind, und Rückkopplungs- bzw. Einschleifungssignale für die Trägerfrequenzoszillatoren (PNCOM, PNCOS) und die Code-Oszillatoren (CNCOM, CNCOS) des Bezugsabschnitts und des Nebenabschnitts erzeugt.

7. Einrichtung gemäß einem der Ansprüche 4 oder 5, **dadurch gekennzeichnet, dass** sie für jedes zu verarbeitende Satellitensignal einen Verarbeitungsblock enthält, der einen Bezugsabschnitt enthält, welcher einen Teil der zweiten Verarbeitungseinrichtung (DT2) bildet, sowie einen Nebenabschnitt, welcher einen Teil der ersten Verarbeitungseinrichtung (DT1) bildet, und einen Abschnitt, welcher der ersten und zweiten Verarbeitungseinrichtung gemeinsam ist, und dass der genannte gemeinsame Abschnitt folgendes enthält:

- einen digitalen Trägerfrequenzoszillator (PNCO), der einen Ausgang hat;

- einen digitalen Code-Oszillator (CNCO) ;

- einen Codegenerator (CG, PDL), der durch den genannten digitalen Code-Oszillator (CNCO) gesteuert bzw. geregelt wird und vorauseilende E-, punktuelle P- und verzögerte L-Codes erzeugt;

dass der genannte Bezugsabschnitt folgendes enthält:

- einen Umsetzer im Basisband (IRMM), der eine Umsetzung im Basisband sowie eine Zurückweisung der Bildfrequenz sicherstellt, wobei der genannte Umsetzer im Basisband (IRMM) einen Eingang hat, welcher mit dem Ausgang des zweiten Analog-Digital-Umsetzers (ADCM) verbunden ist, und einen Eingang, welcher mit dem Ausgang des digitalen Trägerfrequenzoszillators (PNCO) verbunden ist;

- eine Korrelationseinrichtung (ELCM, PCM), die das Ausgangssignal im Basisband von dem Umsetzer im Basisband (IRMM) sowie die voreilenden E-, punktuellen P- und verzögerten Codes, welche durch den Codegenerator (CG, PDL) erzeugt worden sind, empfängt und am Ausgang Korrelationssignale erzeugt;

- eine Akkumulationseinrichtung (ACCELM, ACCM), die am Eingang die Korrelationssignale empfängt und am Ausgang voreilende, punktuelle und verzögerte Schleifenbefehlssignale erzeugt,

und dass der genannter Nebenabschnitt folgendes enthält:

- einen Umsetzer im Basisband (IRMS), der eine Umsetzung im Basisband sowie eine Zurückweisung der Bildfrequenz sicherstellt, wobei der genannte Umsetzer im Basisband (IKMS) einen Eingang hat, welcher mit dem Ausgang des ersten Analog-Digital-Umsetzers (ADCS) verbunden ist, und einen Eingang, welcher mit einem Ausgang des digitalen Trägerfrequenzoszillators (PNCO) verbunden ist,

- eine Korrelationseinrichtung (PCS), die das Ausgangssignal im Basisband von dem Umsetzer im Basisband (IRMS) sowie den punktuellen Code P, der durch den Codegenerator (GC) des Bezugsabschnitts erzeugt worden ist, empfängt und am Ausgang eines punktuelles Korrelationssignal erzeugt;

- eine Akkumulationseinrichtung (ACCS), die am Eingang das punktuelle Korrelationssignal empfängt und am Ausgang ein punktuelles Schleifenbefehlssignal erzeugt,

und dass das Verarbeitungsmittel einen Digitalprozessor (DPS) enthält, der die Schleifenbefehlssignale empfängt, welche durch die Akkumulationseinrichtungen (ACCELM, ACCM, ACCS) des Bezugsabschnitts und des Nebenabschnitts erzeugt worden sind, und Rückkopplungs- bzw. Einschleifungssignale für den Trägerfrequenzoszillator (PNCO) und den Code-Oszillator (CNCO) erzeugt.

8. Einrichtung gemäß einem der vorhergehenden Ansprüche, **dadurch gekennzeichnet, dass** ein genanntes Bezugssignal ein Modulationssignal der Daten ist und dass das genannte Verarbeitungsmittel ein Mittel zum Entfernen des genannten Modulationssignals ist, welches auf den genannten Signalen vorhanden ist, die von der Multiplexereinrichtung hervorgehen.

9. Einrichtung gemäß einem der vorhergehenden Ansprüche, **dadurch gekennzeichnet, dass** ein genanntes Bezugssignal ein Signal ist, das den mit der Bezugsantenne (ANT1) verknüpften Dopplereffekt repräsentiert, welches durch ein Schleifenfilter erzeugt wird, das mit der zweiten Verarbeitungseinrichtung verknüpft ist, und dass das genannte Verarbeitungsmittel ein Mittel zum Steuern, ausgehend von dem genannten Signal, das den Dopplereffekt repräsentiert, eines digital gesteuerten Oszillators (PNCOS, PNCO) ist, welcher einen Teil der ersten Verarbeitungseinrichtung (DT1) bildet, wobei der genannten Oszillator ebenfalls gesteuert wird durch ein Signal, welches den Dopplereffekt repräsentiert, der mit den Antennen verknüpft ist, deren Signale gemultiplext werden, und der durch ein Schleifenfilter erzeugt wird, das mit der ersten Verarbeitungseinrichtung (DT1) verknüpft ist.

10. Einrichtung gemäß Anspruch 9, **dadurch gekennzeichnet, dass** das genannte Schleifenfilter der ersten Verarbeitungseinrichtung ein Filter der zweiten Ordnung ist.

11. Einrichtung gemäß Anspruch 10, **dadurch gekennzeichnet, dass** das genannte Schleifenfilter der ersten Verarbeitungseinrichtung ein Durchgangsband unterhalb von 1 Hz aufweist.

12. Einrichtung gemäß einem der vorhergehenden Ansprüche, **dadurch gekennzeichnet, dass** die erste Verarbeitungseinrichtung (DT1) wenigstens eine Akkumulationseinrichtung enthält, die auf einmal durch ein Signal (CE) des Moments des Codes und durch ein Signal (ASE) des Moments der Umschaltung der Antenne reinitialisiert wird, und dass die zweite Verarbeitungseinrichtung (DT2) wenigstens eine Akkumulationseinrichtung enthält, die durch das genannte Signal (CE) des Moments des Codes reinitialisiert wird.

13. Einrichtung gemäß einem der vorhergehenden Ansprüche, **dadurch gekennzeichnet, dass** die zweite Verarbeitungseinrichtung (DT2) wenigstens eine Akkumulationseinrichtung enthält, mit der eine Einrichtung für die Bestimmung des Vorzeichens der Bits aufeinanderfolgender Daten verbunden ist, und dass die erste Verarbeitungseinrichtung (DT1) wenigstens eine Akkumulationseinrichtung enthält, die verbunden ist mit einer Einrichtung zur Korrektur der partiellen Korrelationswerte, und zwar in Abhängigkeit von dem Vorzeichen der Bits von aufeinanderfolgenden Daten, derart, dass Werte von identischem Vorzeichen erhalten werden.

FIG.1

FIG.2

FIG.4

FIG.3

FIG.5

FIG.6a

EP 0 806 679 B1

FIG.6b

ASE (Ta(i))
CE (Tc(i))

FIG.6c

ASE (Ta(i))
CE (Tc(i))